# EUROPEAN PATENT SPECIFICATION

(11) **EP 1 214 900 B1**
(45) Date of publication and mention of the grant of the patent: **30.06.2004**
(21) Application number: 01310003.7
(22) Date of filing: 29.11.2001
(51) Int. Cl.: A47C 7/42, B61D 33/00, B64D 11/06

(54) **Modular seating system**
Modulares Sitzsystem
Système modulaire pour siège

(30) Priority: 18.12.2000 GB 0030864
(43) Date of publication of application: 19.06.2002
(73) Proprietor: KAB SEATING LIMITED, Northampton NN3 8RS (GB); Design Triangle Limited, Burwell, Cambridge CB5 0HB (GB)
(72) Inventor: Clark, Andy, Girton, Cambridge CB3 OJT (GB); Crawshaw, Andrew, Kimbolton, Huntingdon, PE28 0HS (GB); Moss, Peter, Nr. Royston, Hertfordshire, SG8 7TS (GB); Moorhouse, David, Long Buckby, Northampton NN6 7QT (GB)
(74) Representative: Knott, Stephen Gilbert

(56) References cited:
- FR-A- 2 698 832
- US-A- 3 695 707
- US-A- 3 874 731
- US-A- 4 580 837
- US-A- 6 135 562

## Description

The invention relates to seating systems.

It may be required in particular circumstances to change one type of seat for a different type of seat. Examples of this are an aeroplane or a train where a seat or a number of seats in a row of seats may need to be changed for a seat or a number of seats having different characteristics. This may be necessary, for example, to change the seating density (the number of seats per unit area) or the degree of luxury.

This has previously been done by removing the seat or seats and replacing them with a different seat or seats. This is, however, difficult, expensive and time-consuming and there is also the problem of storing complete seats ready for installation.

An invention for use as a car seat which could be used to solve these problems is disclosed in US 4,580,837. A seating system is shown including a back support in the form of a plate, a base support, a base for connection to the base support and a back member which forms a seat with the base. The back member is releasably connectable to the back support and may be interchanged with other back members.

US 6,135,562 discloses a chair which also includes the same features as US 4,580,837.

According to the invention, there is provided a seating system comprising a back support (15) and a base support (16), a base (38) for connection to the base support (16) and at least two different back members (30, 39, 40, 41), each back member (30, 39, 40, 41) including a sub-frame (31), the sub-frame being releasably connectable to the back support (15), and the base (38) and a back member (30, 39, 40, 41) together forming a seat, characterised in that the back support (15) and the base support (16) are separately formed and then releasably interconnected, said interconnection also connecting the sub-frame (31) to the back support (15).

In this way, different seats can be provided simply by removing one back member and replacing it with a different back member.

The following is a more detailed description of an embodiment of the invention, by way of example, reference being made to the accompanying drawing in which:-
Figure 1 is a schematic view of a row of two seats for a railway carriage supported on a platform, one seat being shown complete but only a back support, a base support and a base of the other seat being shown in exploded view,
Figure 2 shows a first sub-frame and a first cover for forming a seat of the kind shown in Figure 1,
Figure 3 shows a second sub-frame and a second cover for forming a seat of the kind shown in Figure 1,
Figure 4 shows a third sub-frame and a third cover for forming a seat of the kind shown in Figure 1, and
Figure 5 shows a fourth sub-frame and a fourth cover for forming a seat of the kind shown in Figure 1.

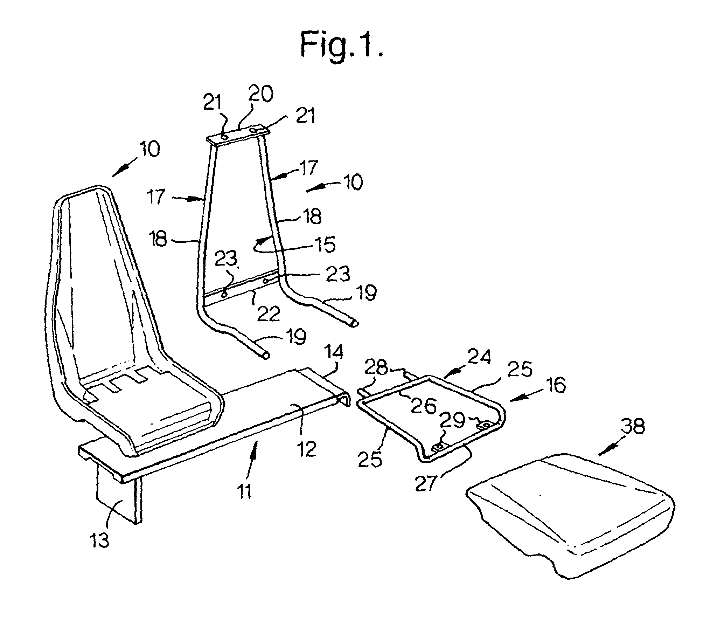

Referring first to Figure 1, a row of seats for a railway carriage is formed by two seats indicated generally at 10 carried on a platform 11. As shown, the row has two seats 10, but there may be more or less seats as required.

The platform 11 is formed by an elongate board 12 having a leg 13 towards one end and a bracket 14 at the other end for connection to a support, such as the side of the carriage, to support the other end of the board 12. It will be appreciated that the platform 11 is only an example of how the seats 10 can be supported.

Each seat 10 includes a back support 15 and a base support 16. The back support 15 is in the form of a frame formed by a pair of generally L-shaped tubes 17 including upwardly converging vertical limbs 18 and generally parallel horizontal limbs 19. The upper ends of the vertical limbs 18 are interconnected by a generally horizontal upper crossbar 20 formed with a pair of parallel vertical holes 21. The lower ends of the vertical limbs 18 are interconnected by a lower horizontal crossbar 22 provided with a pair of parallel horizontally extending holes 23.

The base support 16 is formed by a generally rectangular tube or a wire 24 forming two side members 25 interconnected by a rear member 26 and a front member 27. The rear member is provided with a pair of spaced parallel horizontal pegs 28 and the front member 27 is provided with a pair of horizontal fixing plates 29. Alternatively, only one fixing plate 29 may be provided.

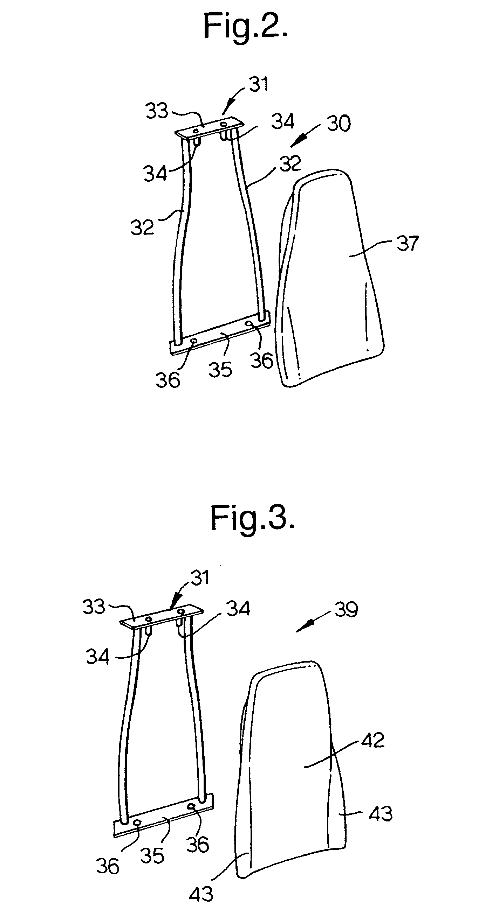

The back support 15 is fixed at an appropriate position on the board 12 of the platform 11 by appropriate fixing devices such as clamping plates or bolts (not shown). A back member indicated generally at 30 is then connected to the back support 15. The first back member 30 to be described will be the back member 30 of Figure 2. Referring to that figure, the back member 30 comprises a sub-frame 31 formed by a pair of upwardly converging tubes or wires 32 interconnected by a horizontal upper crossbar 33 having a pair of downwardly projecting parallel pegs 34. The spacing of the pegs is the same as the spacing of the holes 21 in the upper crossbar 20. The lower ends of the tubes 32 are interconnected by a lower horizontal crossbar 35 provided with a pair of spaced parallel horizontal holes 36. The spacing of these holes is the same as the spacing of the holes 23 and the lower cross bar 22 of the back support 15 and the same as the spacing of the pegs 28 on the rear member 26 of the base support 16.

The back member 30 also includes a shaped cushioned cover 37. This cover 37 has a wider base and then narrows along its length to the top. The cover 37 may be formed in any convenient known way. For example, it may be formed of a foam material and may be upholstered.

The cover 37 is fixed to the sub-frame 31. This may, for example, be a mechanical fixing or the sub-frame 31 may fit into moulded recesses provided in the cover 37. The pegs 34 on the upper crossbar 33 of the sub-frame 31 are then inserted in the holes 21 in the upper crossbar 20 of the back support 15. When so positioned, the holes 36 in the lower crossbar 35 of the sub-frame 31 are in register with the holes 23 in the lower crossbar 22 of the back support 15.

The base support 16 is then connected to a base 38. As seen in Figure 1, this base may be formed by a single cushion. Although the base support 16 and the base 38 are shown separately, they may be permanently connected together. The pegs 28 on the base support 16 are then inserted through the holes 36 in the lower crossbar 35 of the sub-frame 31 and the registering holes 23 in the lower crossbar 22 of the back support 15. This locates the base 38 relative to the cover 37 to form a seat and also prevents the sub-frame 31 being lifted from the back support 15. The base support 16 may then be connected to the board 12 using the fixing plate or plates 29.

The back member 30 of Figure 2 can readily be replaced by any one of the back members 39,40,41 shown in Figures 3, 4 and 5 respectively. In Figures 3, 4 and 5 parts common to these Figures and to Figure 2 are given the same reference numerals and will not be described in detail.

The back member 39 of Figure 3 has a sub-frame 31 which is broadly similar to the sub-frame 31 of the back member of Figure 2 except that the tubes 32 are more widely spaced at their upper ends. The cover 42 is wider at its upper end than the cover 37 of Figure 2.

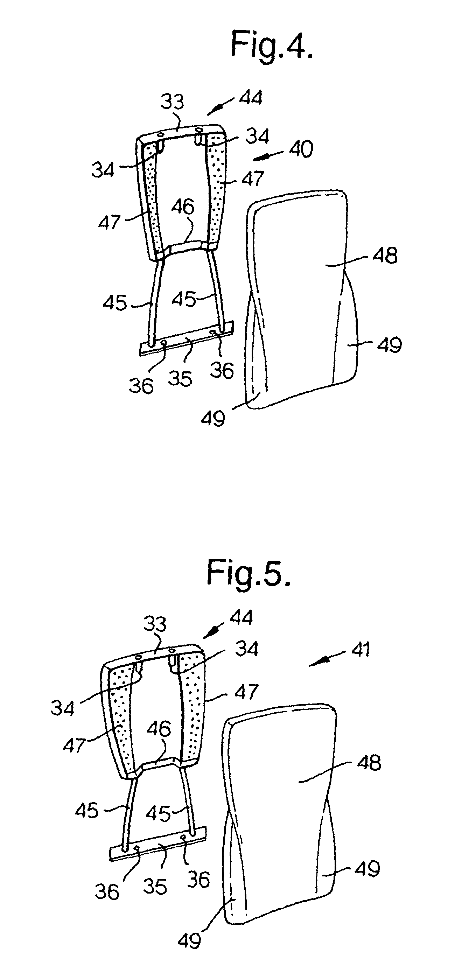

The back member 40 of Figure 4 has a sub-frame 44 that includes the lower horizontal crossbar 35 and then has a pair of tubes 42 which converge as they extend away from the lower horizontal crossbar 35 and connect to an intermediate crossbar 46. The intermediate crossbar 46 extends laterally beyond the tubes 45. Each projecting end supports a respective arcuate perforate metal sheet 47 with the upper ends of the sheets 47 being interconnected by an upper horizontal crossbar 33 provided with the pegs 34. The cushion 48 has lateral supports 49 that are longer and wider than the lateral supports 43 of the cover 42 of the seat of Figure 3. In addition, the upper end of the cushion 48 is broader than the upper end of the cover 42 of the seat of Figure 3. The presence of the intermediate crossbar 46 and the perforated sheets 47 provide a degree of flexibility that increases the comfort of the cover 48.

The back member 41 of Figure 5 is generally similar to the back member 40 of Figure 4 except that the sheets 47 are horizontally wider and the upper end of the cover 50 is broader than the upper end of the cover 48 of Figure 4.

Any one of these back members 39,40,41 can replace the back member 30 as follows. First, the base support 16 is disconnected from the board 12 and the pegs 28 on the rear member 26 withdrawn from the registering holes 36 in the lower crossbar 35 of the sub-frame 31 and the lower crossbar 22 of the back support 15. The back member 30 is then lifted vertically off the back support 15 to remove the pegs 34 from the holes 21 in the upper crossbar 20. The required back member 39,40,41 is then attached to the back support 15 as described above with reference to Figures 1 and 2 with the base 38 then being added.

As well as changing the back member, the spacing of the seats 10 may also be altered by moving the back supports 15 of the seats 10 relative to one another. In addition, there need not be only one base 38; there could be a variety of bases to match the variety of back members 30,39,40 and 41 so that, when a back member is replaced, the base is also replaced. It will also be appreciated that there need not be four different back members 30; there could be any number. They need not be formed as described above; they could be formed in any convenient way. The pegs on the sub-frames 31,44 and the holes 21 in the back support 15 could be interchanged so that the pegs are on the back support 15 and the holes on the sub-frames 31. In addition, the connection between the back members 30,39,40 and 41 and the back support 15 need not be by means of pegs and holes. It could be by screws and bolts and any other suitable fixing means. The back support 15, the base support 16 and the sub-frames 31,44 need not be formed by tubes; they could be formed by solid members.

It will be appreciated that the seating system described above with reference to the drawings provides lower tooling costs, flexibility of production, simplified testing and approval processes and allows rapid reconfiguration of seating. The back members 30,39,40,41 can be transported and stored much more easily than complete seats. In addition, if a back member 40 is damaged, it can be easily and quickly replaced.

## Claims

1. A seating system comprising a back support (15) and a base support (16), a base (38) for connection to the base support (16) and at least two different back members (30, 39, 40, 41), each back member (30, 39, 40, 41) including a sub-frame (31), the sub-frame being releasably connectable to the back support (15), and the base (38) and a back member (30,39,40,41) together forming a seat, **characterised in that** the back support (15) and the base support (16) are separately formed and then releasably interconnected, said interconnection also connecting the sub-frame (31) to the back support (15).

2. A system according to claim 1 wherein each back member (30,39,40,41) comprises said sub-frame (31) and a cover (37).

3. A system according to claim 2 wherein the cover is a cushioned cover (37).

4. A system according to any one of claims 1 to 3 wherein the at least two back members (30,39,40,41) are of different widths along at least a portion of the respective lengths thereof.

5. A system according to any one of claims 1 to 4 wherein the base is a cushioned base (38).

6. A system according to any one of claims 1 to 5 wherein the base is one of at least two different bases (38).

7. A system according to claim 6 wherein the at least two bases (38) are of different widths along at least a portion of the respective lengths thereof.

8. A system according to any preceding claim wherein the releasable connecting means include at least one peg (34) and at least one co-operating hole (21), the or each peg (34) being engageable in an associated hole (21).

9. A system according to claim 8 wherein the sub-frame includes a plurality of pegs (34) and the back support a corresponding plurality of holes (21).

10. A system according to claim 9 wherein the back support (15) comprises a frame having an upper end including a cross-bar (20), said holes (21) being formed in the cross-bar, each sub-frame (31) having an upper end including a crossbar (33), said pegs (34) depending from the back support crossbar (20) for engagement in corresponding holes in the frame crossbar (33).

11. A system according to any preceding claim wherein the base support (16) includes a plurality of pegs (28) insertable into corresponding holes (23) in the back support (15), each sub-frame (31) including holes (36) through which the base support pegs (28) pass to connect the sub-frame (31) to the back support (15).

12. A combination of a system according to any one of claims 1 to 11 with a platform (10) for carrying at least two base supports (16) side-by-side.

## Patentansprüche

1. Sitzsystem mit einer Lehnenhalterung (15) und einer Basishalterung (16), einer Basis (38) für die Verbindung mit der Basishalterung (16) und wenigstens zwei verschiedenen Lehnengliedern (30, 39, 40, 41), wobei jedes Lehnenglied (30, 39, 40, 41) einen Unterrahmen (31) umfasst, wobei der Unterrahmen lösbar mit der Lehnenhalterung (15) verbunden werden kann und wobei die Basis (38) und ein Lehnenglied (30, 39, 40, 41) zusammen einen Sitz bilden, **dadurch gekennzeichnet, dass** die Lehnenhalterung (15) und die Basishalterung (16) separat zueinander ausgebildet werden und dann lösbar miteinander verbunden werden, wobei die Verbindung auch den Unterrahmen (31) mit der Lehnenhalterung (15) verbindet.

2. System nach Anspruch 1, **dadurch gekennzeichnet, dass** jedes Lehnenglied (30, 39, 40, 41) den Unterrahmen (31) und eine Hülle (37) umfasst.

3. System nach Anspruch 2, **dadurch gekennzeichnet, dass** die Hülle eine gepolsterte Hülle (37) ist.

4. System nach einem der Ansprüche 1 bis 3, **dadurch gekennzeichnet, dass** wenigstens zwei Lehnenglieder (30, 39, 40, 41) verschiedene Breiten entlang von wenigstens einem Teil der entsprechenden Längen aufweisen.

5. System nach einem der Ansprüche 1 bis 4, **dadurch gekennzeichnet, dass** die Basis eine gepolsterte Basis (38) ist.

6. System nach einem der Ansprüche 1 bis 5, **dadurch gekennzeichnet, dass** die Basis eine von wenigstens zwei unterschiedlichen Basen (38) ist.

7. System nach Anspruch 6, **dadurch gekennzeichnet, dass** die wenigstens zwei Basen (38) verschiedene Breiten entlang von wenigstens einem Teil der entsprechenden Längen aufweisen.

8. System nach einem der vorstehenden Ansprüche, **dadurch gekennzeichnet, dass** die lösbare Verbindung durch wenigstens einen Zapfen (34) und wenigstens ein entsprechendes Loch (21) bewerkstelligt wird, wobei jeder Zapfen (34) in ein entsprechendes Loch (21) eingesteckt werden kann.

9. System nach Anspruch 8, **dadurch gekennzeichnet, dass** der Unterrahmen eine Vielzahl von Zapfen (34) aufweist und die Lehne eine entsprechende Vielzahl von Löchern (21) aufweist.

10. System nach Anspruch 9, **dadurch gekennzeichnet dass** die Lehnenhalterung (15) einen Rahmen mit einem oberen Ende einschließlich eines Querbalkens (20) umfasst, wobei die Löcher (21) in dem Querbalken ausgebildet sind, und dass jeder Unterrahmen (31) ein oberes Ende einschließlich eines Querbalkens (33) umfasst, wobei die Zapfen (34) von dem Unterrahmen-Querbalken (33) nach unten vorstehen, um in die entsprechenden Löcher (21) in dem Lehnenhalterungs-Querbalken (20) eingesteckt zu werden.

11. System nach einem der vorstehenden Ansprüche, **dadurch gekennzeichnet, dass** die Basishalterung (16) eine Vielzahl von Zapfen (28) aufweist, die in entsprechende Löcher (23) in der Lehnenhalterung (15) eingesteckt werden können, wobei jeder Unterrahmen (31) Löcher (36) aufweist, durch welche die Zapfen (28) der Basishalterung gesteckt werden, um den Unterrahmen (31) mit der Lehnehalterung (15) zu verbinden.

12. Kombination aus einem System nach einem der Ansprüche 1 bis 11 mit einer Plattform (10), die wenigstens zwei Basishalterungen (16) nebeneinander trägt.

## Revendications

1. Système pour siège comprenant un support de dossier (15) et un support de base (16), une base (38) pour le raccordement au support de base (16) et au moins deux éléments de dossier différents (30, 39, 40, 41), chaque élément de dossier (30, 39, 40, 41) comprenant un sous châssis (31), le sous châssis pouvant être raccordé de manière amovible au support de dossier (15), et la base (38) et un élément de dossier (30, 39, 40, 41) formant ensemble un siège, **caractérisé en ce que** le support de dossier (15) et le support de base (16) sont formés séparément et interconnectés de manière amovible, ladite interconnexion raccordant également le sous châssis (31) au support de dossier (15).

2. Système selon la revendication 1, dans lequel chaque élément de dossier (30, 39, 40, 41) comprend ledit sous châssis (31) et un élément de recouvrement (37).

3. Système selon la revendication 2, dans lequel l'élément de recouvrement est un élément de recouvrement matelassé (37).

4. Système selon l'une quelconque des revendications 1 à 3, dans lequel les au moins deux éléments de dossier (30, 39, 40, 41) sont de largeurs différentes le long d'au moins une partie de ses longueurs respectives.

5. Système selon l'une quelconque des revendications 1 à 4, dans lequel la base est une base matelassée (38).

6. Système selon l'une quelconque des revendications 1 à 5, dans lequel la base est l'une parmi au moins les deux différentes bases (38).

7. Système selon la revendication 6, dans lequel les au moins deux bases (38) sont de largeurs différentes le long d'au moins une partie de ses longueurs respectives.

8. Système selon l'une quelconque des revendications précédentes, dans lequel les moyens de raccordement amovibles comprennent au moins un taquet de fixation (34) et au moins un trou de coopération (21), le taquet de fixation ou chaque taquet de fixation (34) pouvant être mis en prise dans un trou (21) associé.

9. Système selon la revendication 8, dans lequel le sous châssis comprend une pluralité de taquets de fixation (34) et le support de dossier comprend une pluralité correspondante de trous (21).

10. Système selon la revendication 9, dans lequel le support de dossier (15) comprend un châssis ayant une extrémité supérieure comprenant une barre transversale (20), lesdits trous (21) étant formés dans la barre transversale, chaque sous châssis (31) ayant une extrémité supérieure comprenant une barre transversale (33), lesdits taquets de fixation (34) dépendant de la barre transversale (20) du support de dossier pour la mise en prise dans les trous correspondants dans la barre transversale (33) du châssis.

11. Système selon l'une quelconque des revendications précédentes, dans lequel le support de base (16) comprend une pluralité de taquets de fixation (28) pouvant être insérés dans les trous (23) correspondants dans le support de dossier (15), chaque sous châssis (31) comprenant des trous (36) à travers lesquels les taquets de fixation (28) du support de base passent pour raccorder le sous châssis (31) au support de dossier (15).

12. Combinaison d'un système selon l'une quelconque des revendications 1 à 11 avec une plateforme (10) pour supporter au moins deux supports de base (16) côte à côte.
